(19) Europäisches Patentamt
European Patent Office
Office européen des brevets

(11)  EP 3 264 526 A1

(12)  **DEMANDE DE BREVET EUROPEEN**

(43) Date de publication:
**03.01.2018 Bulletin 2018/01**

(51) Int Cl.:
**H01Q 1/28** *(2006.01)*      **H01Q 19/17** *(2006.01)*
**H01Q 25/00** *(2006.01)*

(21) Numéro de dépôt: **17178423.4**

(22) Date de dépôt: **28.06.2017**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD**

(30) Priorité: **28.06.2016 FR 1656041**

(71) Demandeur: **Centre National d'Etudes Spatiales
75001 Paris (FR)**

(72) Inventeur: **CONTRERES, Romain
31320 Castanet-Tolosan (FR)**

(74) Mandataire: **Regimbeau
20, rue de Chazelles
75847 Paris Cedex 17 (FR)**

(54)  **SOURCE MULTI-FAISCEAUX POUR ANTENNE MULTI-FAISCEAUX**

(57)  L'invention concerne un bloc source multi-faisceaux (S0, S1, S2) pour antenne multi-faisceaux (10), le bloc source comportant
une pluralité de sources élémentaires identiques adjacentes (100), agencées en sous-réseaux (R) de forme identique,
le bloc source étant caractérisée en ce le sous-réseau (R) est formé de trois sources élémentaires adjacentes entre elles (S10, S11, S12), définissant une première direction (X) passant par deux des trois sources (S10, S11),

la source comprenant au moins deux sous-réseaux (R11, R12) formant une première ligne (L1) selon la première direction (X), les deux sous-réseaux (R11, R12, R13) étant décalés, dans la première direction (X), d'un pas (L) correspondant à une source élémentaire, de sorte qu'au moins une source élémentaire (S11) appartient aux deux sous-réseaux (R11, R12), les deux sous-réseaux consécutifs (R11, R12) étant excités à deux couleurs différentes par l'au moins un répartiteur.

**FIG. 8**

EP 3 264 526 A1

## Description

DOMAINE TECHNIQUE GENERAL

L'invention concerne le domaine des télécommunications par satellite. Elle concerne plus particulièrement un schéma d'entrelacement de sources pour une antenne multi-faisceaux.

L'invention s'applique en particulier à l'optimisation des ressources d'un satellite par réutilisation de fréquence dans un schéma dit à quatre couleurs.

ETAT DE L'ART

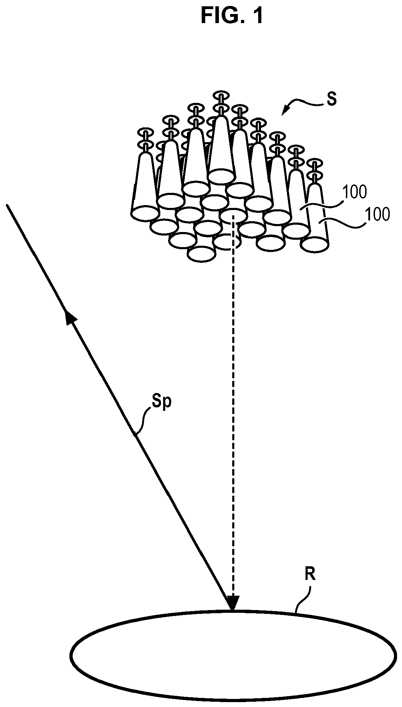

Les antennes multi-faisceaux pour la couverture par spots d'une zone géographique donnée sont utilisées dans les communications par satellite. Pour cela, comme représenté en **figure 1,** un bloc source S, en pratique une pluralité de sources élémentaires 100, est placée au foyer d'un réflecteur R conformé pour créer sur le sol terrestre le spot Sp.

Le réflecteur est par exemple un paraboloïde asymétrique.

L'objectif principal de cette technologie est la baisse du coût de transmission par bit en utilisant au mieux la bande de fréquence allouée à une application donnée.

Les techniques actuelles font appel à des systèmes antennaires multi-faisceaux fonctionnant en diversité de fréquence et diversité de polarisation.

Ces techniques sont similaires à celles utilisées pour des réseaux de communications terrestres dits « cellulaires ».

Avec cette technique, la répartition des signaux est telle que deux cellules adjacentes n'ont pas de signaux ayant les mêmes caractéristiques, c'est-à-dire des signaux avec la même fréquence et la même polarisation. En revanche, les signaux identiques sont réutilisés dans des cellules non adjacentes afin d'accroître la capacité du système.

De manière connue, une antenne multi-faisceaux de type « multiples sources par faisceaux » comporte un bloc source multi-faisceaux placée proche du foyer d'un système focalisateur qui comprend au moins un réflecteur. Le bloc source multi-faisceaux comporte plusieurs sources élémentaires arrangées en sous-réseaux. Chaque source élémentaire est constituée d'un élément rayonnant, typiquement sous la forme d'un cornet, et d'une chaine radiofréquence RF alimentant l'élément rayonnant.

Il est possible d'obtenir un rayonnement de l'antenne par faisceaux multiples si les faisceaux élémentaires sont découplés les uns par rapport aux autres (par découplage spatial ou via des polarisations orthogonales ou des fréquences différentes entre deux faisceaux adjacents).

Lorsque la couverture est composée de spots régulièrement disposés au sol, la distance entre deux spots adjacents conditionne l'espace entre deux sources adjacentes dans le plan focal.

Une configuration d'antenne permettant d'élaborer un grand nombre de faisceaux fins contigus est d'utiliser un système de deux antennes en configuration MFPB (en anglais : *Multiple Feed Per Beam)* utilisant plusieurs sources par faisceau.

Généralement, la première antenne Tx fonctionne en l'émission, la seconde antenne Rx fonctionne en réception, et pour chaque antenne, chaque faisceau est formé en combinant les signaux issus de plusieurs sources élémentaires adjacentes, certaines de ces sources étant réutilisées pour élaborer des faisceaux contigus.

On parlera de sous-réseau, qui correspond à un groupement de sources élémentaires adjacentes excités à la même fréquence et la même polarisation.

Une efficacité de rayonnement satisfaisante est obtenue grâce à la réutilisation des sources qui participent à la formation de plusieurs faisceaux, ce qui permet d'augmenter la surface radiative allouée à chaque faisceau et de diminuer les pertes par débordement. Lorsque les sources sont partagées entre plusieurs faisceaux de même fréquence et de même polarisation, il est possible de créer une condition d'indépendance entre les faisceaux partageant des éléments rayonnants en imposant la formation de lois dites orthogonales.

L'orthogonalité est réalisée en utilisant des coupleurs directifs qui isolent deux à deux les circuits de distribution d'un réseau de formation de faisceaux BFN (en anglais : *Beam Forming Network)* qui partagent les mêmes éléments rayonnants.

L'ensemble des amplitudes/phases nécessaires pour former un faisceau est appelé « loi d'alimentation ».

De façon usuelle, pour les transmissions par satellite, la bande de fréquence allouée est divisée en deux sous bandes de fréquences F1 et F2, et deux polarisations orthogonales linéaires (horizontale H et verticale V) ou circulaires (droite PCG ou gauche PCD) sont utilisées.

Ainsi les sous-réseaux d'un schéma de réutilisation par quatre (schéma quatre couleurs, pour chaque couple de valeur de fréquence et de polarisation) sont définies comme suit : F1 + H (ou PCG) ; F1 + V (ou PCD) ; F2 + H (ou PCG) ; F2 + V (ou PCD).

A titre d'exemple, on a F1 = [17300 ; 18700] MHz et F2 = [18800 ; 20200] MHz et la polarisation en PCG et PCD.

On parlera de « couleur » pour chaque couple. Dans l'exemple précité, on a donc quatre couleurs différentes. On parle de couverture pour désigner l'ensemble des spots comprenant l'ensemble des couleurs. Les quatre couples sont référencés (P1, F1), (P1, F2), (P2, F1), (P2, F2).

Pour des raisons de compacités, des sources élémentaires, qui peuvent émettre dans les quatre domaines précités, sont configurées pour appartenir à deux sous-réseaux différents. On obtient ainsi un entrelacement des sous-réseaux par réutilisation de certaines sources élémentaires.

Un sous-réseau permet de former un faisceau ayant une fréquence donnée et une polarisation donnée.

L'entrelacement de sous-réseaux permet d'agrandir la surface utilisée pour la formation d'un faisceau et donc d'améliorer ses caractéristiques radioélectriques.

La segmentation de la couverture en sous-réseaux de différentes couleurs impose l'utilisation de deux polarisations orthogonales.

Il est à noter que les antennes peuvent fonctionner en réception Rx ou/et transmission Tx.

Dans le cas d'une antenne Rx ou Tx, le diamètre de la source élémentaire (sans compter l'élément radiatif) est environ 0,6λ, avec À la longueur d'onde émise par ladite source. Dans le cas d'une antenne Rx/Tx, le diamètre est supérieur à 1,7 À.

Des contraintes géométriques, liées à la taille des sources élémentaires, existent ainsi.

En ce qui concerne les sous-réseaux, diverses configurations ont déjà été développées.

En **figure 2a** et présenté dans le document FR2993715, une première configuration dite « septet » consiste à utiliser sept sources élémentaires 100 contribuant à la formation d'un sous-réseau. Chaque sous-réseau comprend une source centrale S10 et six sources périphériques S11 à S16 réparties autour de la source centrale S10.

Les sous-réseaux sont associés de telle sorte, à l'exception des bords, deux sous-réseaux adjacents comportent deux sources élémentaires en commun.

En outre, chaque couleur est adjacente d'une couleur différente.

Par conséquent, une source élémentaire peut ainsi être utilisée dans trois sous-réseaux différents. Des contraintes d'orthogonalité sont nécessairement présentes.

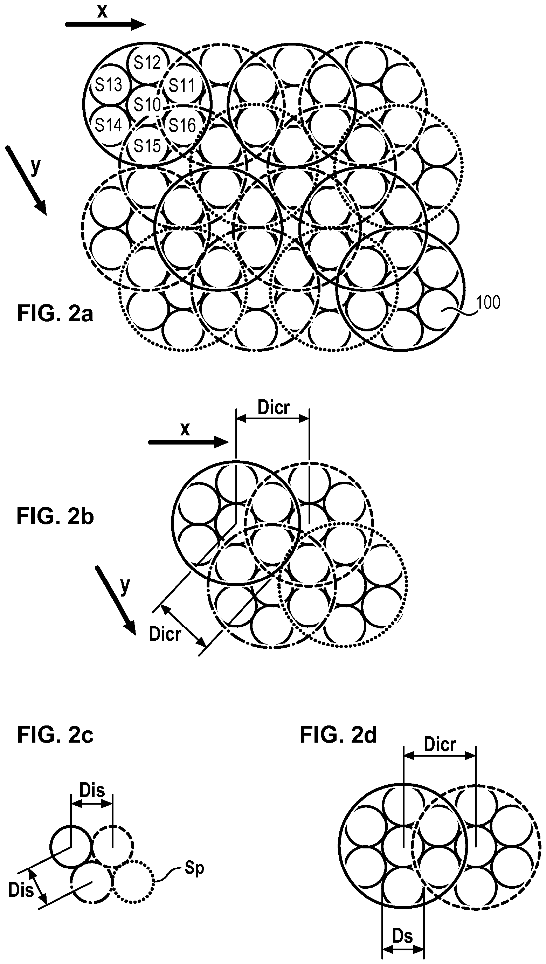

Dans cette configuration (voir **figures 2b, 2c, 2d**), la distance inter-spot est constante en X et en Y (les axes X et Y sont définies pour cette configuration sur les figures), mais la distance inter-réseau Dicr impose de fortes contraintes sur le diamètre de la source Ds, puisque $D_s = D_{icr}/\sqrt{3}$.

Par conséquent, il est difficile d'aménager des sources quatre accès pour la réception Rx et la transmission Tx, ainsi que les BFNs qui doivent être aussi Tx/Rx. On préfère alors répartir la Tx et la Rx sur deux réflecteurs différents.

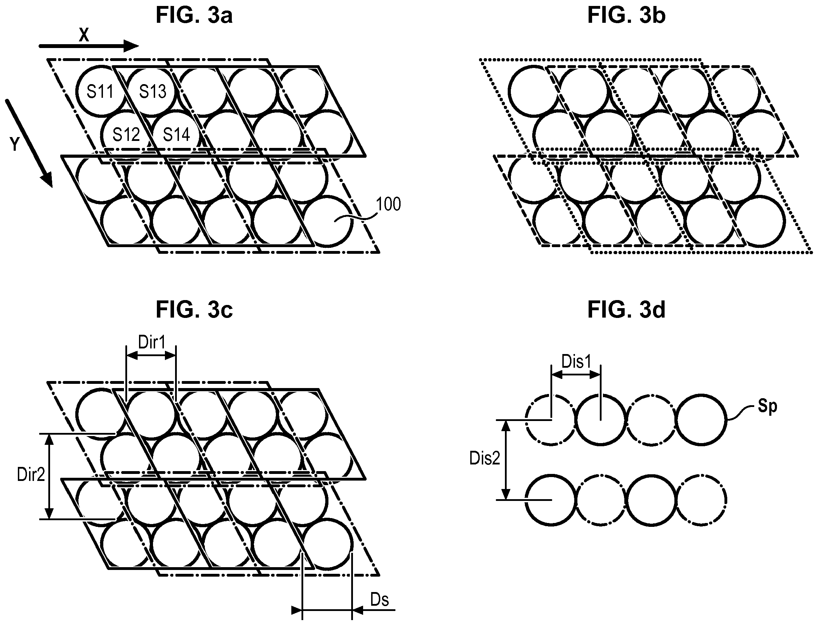

En **figure 3a et 3b,** une deuxième configuration consiste à utiliser quatre sources adjacentes S11 à S14 disposés en losange, dont deux sont entrelacées.

La configuration comprend une première série de losanges entrelacés, disposée de façon adjacente avec une deuxième série de losanges entrelacées, mais sans entrelacement entre les séries. L'entrelacement se fait typiquement en polarisation, ce qui signifie qu'il n'y a pas de contrainte d'orthogonalité.

Chaque source élémentaire est ainsi utilisée dans deux sous-réseaux différents au maximum. En revanche, du fait de l'inhomogénéité entre les centres des réseaux en X et Y (les axes X et Y sont définies pour cette configuration sur les figures), la couverture est répartie entre deux réflecteurs : il faut alors, comme représenté en **figures 3a et 3b,** un premier réflecteur pour deux couleurs (celles des fréquences F1), et un deuxième réflecteur pour les deux autres couleurs (celles de fréquences F2).

Dans cette configuration, on définit Dir1 comme la distance inter-réseau entre sous-réseaux entrelacés et Dir2 comme la distance inter-réseau entre un sous-réseau issu des sous-réseaux entrelacés et un sous-réseau issu des sous-réseaux non-entrelacés (voir **figure 3c et 3d**). Par conséquent, Dir1 est inférieur à Dir2. On a alors Dir1 égal à Ds.

Peu de contraintes existent alors pour la dimension de la source Ds et le réseau peut être Tx et Rx.

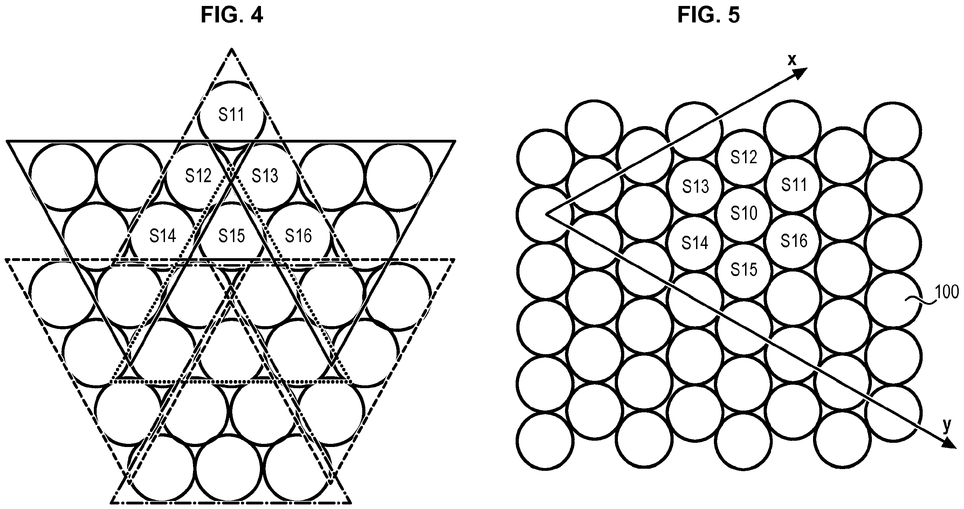

En **figure 4,** une troisième configuration dit « *T-array* » consiste à utiliser six sources élémentaires S11 à S16. Chaque sous-réseau est de forme triangulaire et, à l'exception des bords, chaque source élémentaire est utilisée pour au moins deux sous-réseaux.

La couverture est effectuée avec un seul réflecteur mais comme $D_s = D_{icr}/\sqrt{3}$, il faut un réflecteur Tx et un réflecteur Rx.

PRESENTATION DE L'INVENTION

Un objectif de l'invention est de proposer une source multi-faisceaux permettant de réaliser une autre configuration, autorisant un entrelacement de sous-réseaux sans contraintes d'orthogonalités.

A cet effet, l'invention concerne un bloc source multi-faisceaux pour antenne multi-faisceaux, dont les sous-réseaux entrelacés ont une forme de delta.

En particulier, l'invention concerne un bloc source multi-faisceaux pour antenne multi-faisceaux, le bloc source comportant

une pluralité de sources élémentaires identiques adjacentes,

au moins un répartiteur, ledit répartiteur étant configuré pour générer un signal d'excitation des sources élémentaires à une couleur donnée, une couleur correspondant à un couple fréquence/polarisation, dans laquelle

les sources élémentaires sont agencées en sous-réseaux de forme identique,

l'au moins un répartiteur est configuré pour générer un signal d'excitation des sources élémentaires d'un sous-réseau à une fréquence donnée et une polarisation donnée,

le bloc source étant caractérisée en ce le sous-réseau est formé de trois sources élémentaires adjacentes entre elles, définissant une première direction passant par deux des trois sources,

la source comprenant au moins deux sous-réseaux formant une première ligne selon la première direction, les deux sous-réseaux étant décalés, dans la première direction, d'un pas correspondant à une source élémentaire, de sorte qu'au moins une source élémentaire appartient aux deux sous-réseaux, les deux sous-réseaux consécutifs étant excités à deux couleurs différentes par l'au moins un répartiteur.

Le bloc source peut comprendre les caractéristiques suivantes, prises seules ou en combinaison :

- les trois sources élémentaires de tout sous-réseau sont agencées en triangle équilatéral,
- les deux couleurs différentes correspondent à deux couples présentant les mêmes fréquences mais des polarisations différentes,
- le bloc source comprend en outre deux sous-réseaux formant une deuxième ligne selon la première direction, les deux sous-réseaux étant décalés entre eux d'un pas correspondant à une source élémentaire selon la première direction, et la deuxième ligne étant décalée d'un pas correspondant à deux sources élémentaires selon une deuxième direction orientée à 60° par rapport à la première direction, de sorte qu'aucun entrelacement n'ait lieu entre les deux lignes, les sous-réseaux de la deuxième ligne étant respectivement excités avec les deux mêmes couleurs que celles de la première ligne,
- le bloc source comprend en outre deux sous-réseaux formant une troisième ligne, les deux sous-réseaux étant décalés entre eux d'un pas correspondant à une source élémentaire selon la première direction, la troisième ligne étant décalée d'un pas correspondant à une source élémentaire dans la deuxième direction par rapport à la première ligne, de sorte qu'un entrelacement entre la première et la troisième lignes est effectué,
- le bloc source comprend en outre deux sous-réseaux formant une quatrième ligne, les deux sous-réseaux étant décalés d'un pas correspondant à une source élémentaire selon la première direction, la quatrième ligne étant décalée d'un pas correspondant à une source élémentaire dans la deuxième direction par rapport à la deuxième ligne, de sorte qu'un entrelacement entre la deuxième et la quatrième lignes est effectué,
- chaque source élémentaire comprend au moins un diplexeur, pour générer quatre ports correspondant aux quatre couleurs différentes.
- le bloc comprend quatre répartiteurs, chacun relié à port de sortie d'une source, chacun des quatre répartiteurs étant configurés pour générer une des quatre couleurs.

L'invention propose aussi un ensemble comprenant deux blocs sources tels que décrits précédemment, chaque bloc source émettant selon deux couleurs distinctes de celles de l'autre bloc source.

L'invention propose aussi une antenne multi-faisceaux comprenant une source multi-faisceaux telle que décrite précédemment ou un ensemble tel que décrit précédemment, comprenant un réflecteur par bloc source, placé dans le plan focal du bloc source.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- La figure 1, déjà présentée, illustre une antenne comprenant un bloc source et un réflecteur,
- Les figures 2a à 2d, 3a à 3d et 4, déjà présentée, illustrent des états de la technique,
- Les figures 5 et 6 illustrent un réseau hexagonal compact de sources élémentaires,
- La figure 7 illustre la forme du sous-réseau de base, en forme de delta,
- La figure 8 illustre l'entrelacement de base entre deux sous-réseaux,
- Les figures 9a à 9c illustrent un mode de réalisation avec deux sources, chacune étant Rx et Tx,
- Les figures 10a à 10c illustrent un mode de réalisation avec deux sources, chacune étant Rx ou Tx mais couvrant les quatre couleurs,
- La figure 11 illustre une chaine radiofréquence pouvant être utilisée dans la configuration delta,
- La figure 12 schématise quatre répartiteurs avec des sources utilisant des diplexeurs.

DESCRIPTION DETAILLEE

Un bloc source multi-faisceaux comporte une pluralité de sources élémentaires 100 agencées selon un réseau régulier hexagonal, c'est-à-dire que chaque source élémentaire 100 est adjacente à six autres sources élémentaires 100 (voir **figure 5**). Ainsi, à l'exception des bords physiques et géométriques du bloc source multi-faisceaux (c'est-à-dire les sources élémentaires qui sont placés au bord), autour d'une source élémentaire centrale S10, se trouvent six sources adjacentes S11, S12, S13, S14, S15, S16. Comme chaque source élémentaire peut être une source centrale, chaque source élémentaire peut avoir plusieurs références, en fonction de son appartenance à un ou plusieurs sous-réseaux.

Les sources élémentaires 100 ont généralement une forme circulaire dans un plan orthogonal, du fait de l'ouverture de l'élément rayonnant qui est généralement circulaire.

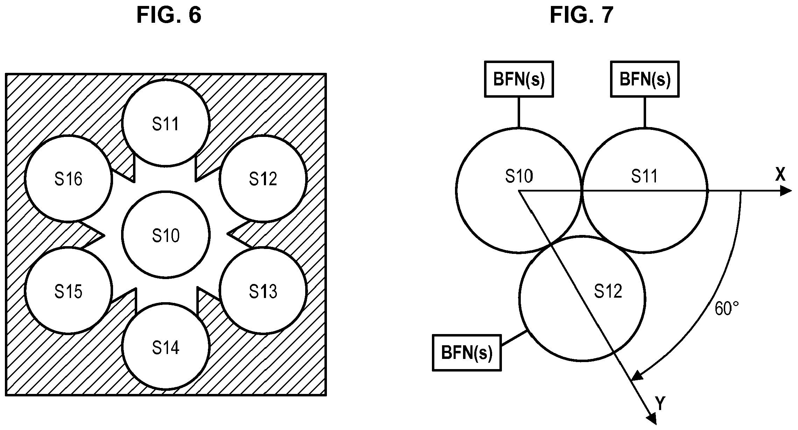

Par « A adjacent à B», il est signifié « A immédiatement à côté de B, sans autre élément entre A et B», sans qu'une notion de contact soit nécessairement présente. En effet, en pratique, les sources élémentaires 100 peuvent être légèrement espacées, comme représenté en **figure 6.**

Les sources élémentaires 100 sont groupées par au moins un répartiteur BFN en sous-réseaux de géométrie identique.

Les sources élémentaires 100 comprennent un élément rayonnant et un excitateur. L'excitateur comprend deux ports, un pour chaque polarisation. Dans un mode de réalisation, un diplexeur peut être prévu au niveau de chaque port, afin de créer deux fois deux ports, soit quatre ports (un pour chaque couleur). Cela sera décrit par la suite.

Dans le cas de sources Rx/Tx, chaque port est dédoublé (un pour la Rx, un pour la Tx).

En plus des sources élémentaires 100, la source multi-faisceaux 20 comprend donc au moins un répartiteur BFN, présenté en introduction, dont la fonction est de générer des signaux d'alimentation pour exciter les sources élémentaires 100 selon une loi d'alimentation prédéterminée. L'au moins un BFN est connecté aux ports de la source élémentaire.

Cette loi d'alimentation permet de définir les sous-réseaux qui correspondent à des groupes de sources élémentaires 100 toutes excitées à la même fréquence et à la même polarisation. En d'autres termes, les sources élémentaires 100 d'un même réseau sont à la même couleur.

Préférablement, pour s'affranchir des contraintes d'orthogonalité, on utilise autant de BFN qu'il y a de couleurs, c'est-à-dire quatre. Chaque source élémentaire peut donc être connectée à plusieurs répartiteurs BFN.

Comme représenté en **figure 7,** le sous-réseau R définit ici comprend trois sources élémentaires adjacentes entre elles et donc nécessairement disposées en triangle équilatéral. Il s'agit par exemple de trois sources S10, S11, S12, ou S10, S12, S13, etc. Les références numériques sont les mêmes pour chaque sous-réseau. Pour la suite de la description, on considérera qu'il s'agit des sources S10, S11 et S12 définissant une première, une deuxième et une troisième sources élémentaires, toujours disposées de la même façon.

Le sous-réseau a ainsi une forme de delta.

On définit une première direction X, définie par S10 et S11 (passant par leur centre respectif), et une deuxième direction Y, définie par S10 et S12 (passant par leur centre respectif). Par conséquent, les deux directions X et Y forment un angle de 60° entre elles.

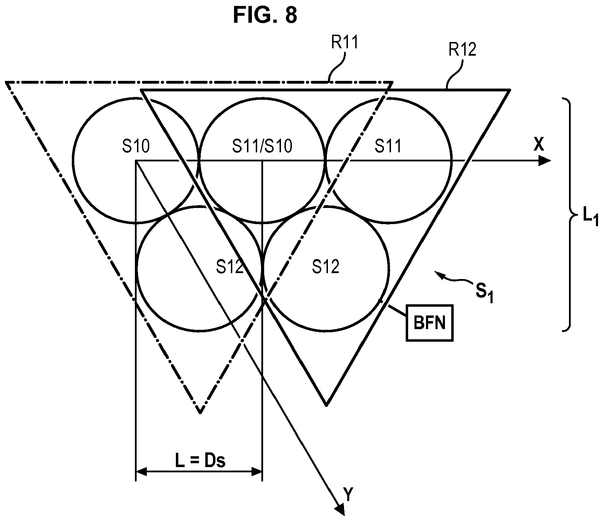

Le bloc source S1 comprend au moins un premier sous-réseau R11 et un deuxième sous-réseau R12 formant une première ligne L1 selon la première direction X **(figure 8).**

L'entrelacement est effectué par un décalage du deuxième sous-réseau R21 d'un pas L correspondant à une source élémentaire 100 (de diamètre Ds) dans la première direction X.

Ainsi, la source S11 du premier sous-réseau R11 correspond à la source S10 du deuxième sous-réseau et il n'y a qu'une seule source élémentaire réutilisée.

Le premier sous-réseau R11 partage sa deuxième source élémentaire S11 avec le deuxième sous-réseau R12, pour lequel cette même source est la première source élémentaire S10.

Deux répartiteur BFNs indépendants sont utilisés pour alimenter les sous-réseaux R11 et R12, produisant des faisceaux à des polarisations orthogonales.

Le motif défini par ces deux sous-réseaux R11, R12 peut être prolongé sur la ligne L1, avec un entrelacement similaire (voir références R13, R14, R23). On obtient alors une alternance des deux couleurs pour les sous-réseaux successifs.

Dans une variante préférée, les deux couleurs ont la même fréquence mais des polarisations différentes.

La source S1 pour l'instant n'émet que selon deux couleurs.

Deux modes de réalisation vont être à présent décrits.

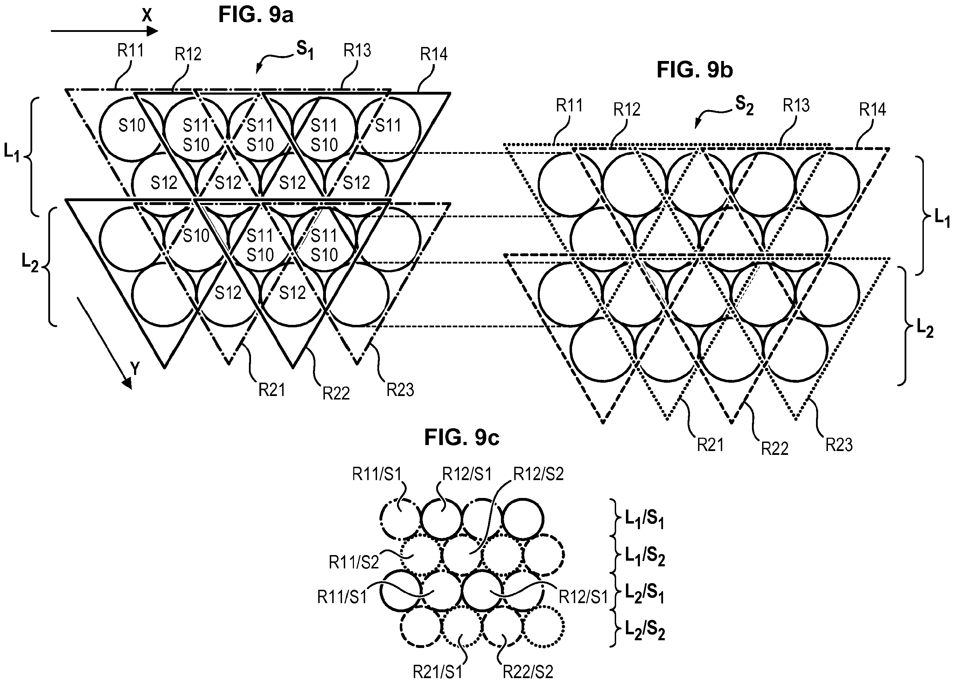

Bloc sources Tx/Rx à deux couleurs **(figure 9a à 9c)**

Le bloc source S1 comprend en outre un autre premier sous-réseau R21 et un autre deuxième sous-réseau R22 formant une deuxième ligne L2 selon la première direction X. Ces deux sous-réseaux R21, R22 sont décalés entre deux du même pas L correspondant à une source élémentaire. On obtient ainsi pour la deuxième ligne L2 un entrelacement similaire à celui de la première ligne L1.

Cette deuxième ligne L2 est décalée, par rapport à la première ligne L1, d'un pas correspondant à deux sources élémentaires dans la deuxième direction Y. Aucun entrelacement n'a donc lieu entre les deux lignes L1, L2. Afin d'assurer un agencement optimal des quatre couleurs sur la couverture, les sous-réseaux R21, R22 de la deuxième ligne L2 sont excités avec les deux mêmes couleurs que celles de la première ligne L1.

Toujours dans l'optique d'obtenir un agencement optimal des quatre couleurs sur la couverture, le sous-réseau R21 de la deuxième ligne L2 qui est décalé, dans la direction Y, d'un pas correspondant à deux sources élémentaires par rapport au sous-réseau R11 de la première ligne L1 est excité à la même couleur que le sous-réseau R11.

On obtient ainsi un bloc source S1 qui éclaire dans deux couleurs distinctes.

Dans ce mode de réalisation, Dicr n'est pas constant en X et en Y, ce qui signifie qu'il faut utiliser deux réflecteurs et donc deux blocs sources pour réaliser la couverture. En effet, en X, Dicr= Ds et en Y, on a Dicr = 2Ds. En revanche, comme Dicr = Ds en X, on peut accomoder des sources diplexants fonctionnant en Rx/Tx.

En revanche, il faut un deuxième bloc source S2 pour émettre et recevoir dans les deux autres couleurs.

Le motif défini par les deux sous-réseaux de chaque ligne peut être prolongé sur chaque ligne (de part et d'autre), avec un entrelacement similaire (voir références R13, R14, R23). On obtient alors une alternance de deux couleurs pour les sous-réseaux successifs.

En outre, la configuration avec deux lignes décrite peut être répétée dans la deuxième direction, pour générer davantage de spots.

Un deuxième bloc source S2 est alors utilisée (voir **figure 9b**). Ce deuxième bloc source S2 correspond exactement en matière de structure au premier bloc source S1 décrite précédemment, sauf que les deux couleurs qu'elle gère sont les deux couleurs restantes.

Pareillement, cette configuration avec deux lignes peut être répétée dans la deuxième direction, pour générer davantage de spots.

En ce qui concerne l'agencement des blocs sources S1, S2, ceux-ci doivent être disposés côte à côté en décalage, afin de mieux couvrir les spots.

Typiquement, comme illustré sur les **figures 9a et 9b,** les lignes L1, L2 respectives des deux blocs sources S1, S2 ne sont pas alignés, mais décalées d'un pas correspondant à une source élémentaire dans la direction Y. Cela se traduit au niveau des spots par une ligne de spots avec les deux couleurs du premier bloc source S1 (notée L1/S1), puis une ligne dessous avec les deux couleurs du deuxième bloc source S2 (notée L1/S2), puis une ligne dessous avec les deux couleurs du premier bloc source S1 (notée L2/S1), puis une ligne dessous avec les deux couleurs de deuxième bloc source S2 (notée L2/21).

Chaque bloc source S1, S2 est associé à un réflecteur pour former une antenne (non représenté).

Dans ce mode de réalisation, les sources élémentaires mutualisées émettent préférablement à la même fréquence mais à des polarisations différentes. Ainsi, les deux ports de la source élémentaires peuvent être connectés chacun à un BFN différent, ce qui évite les contraintes d'orthogonalité qui peuvent nuire aux performances.

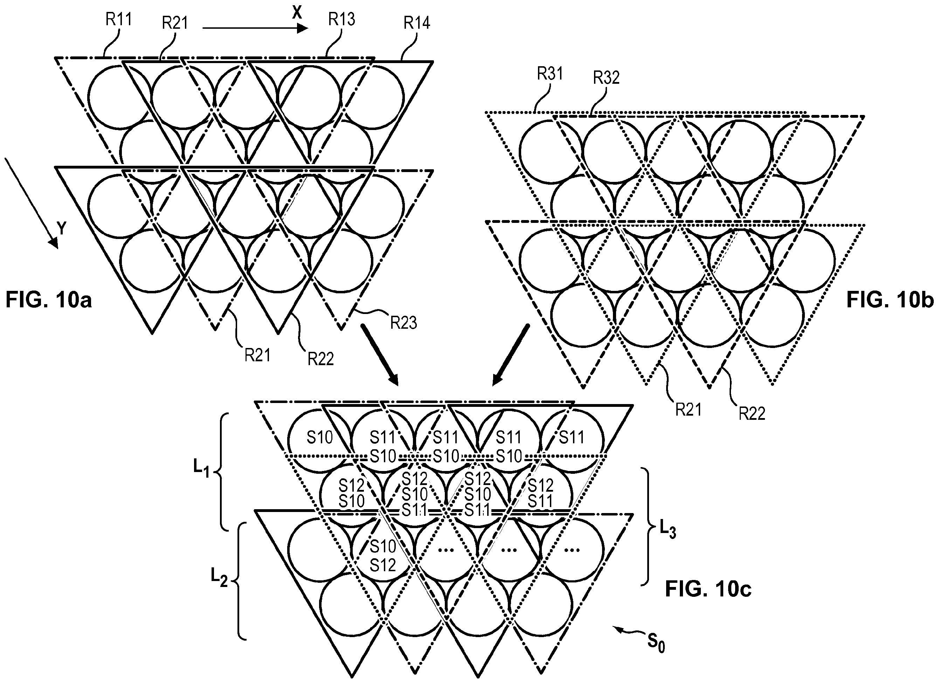

Bloc sources Tx ou Rx à quatre couleurs **(figures 10a à 10c)**

A partir du bloc source S1 décrite dans le mode de réalisation, le bloc source Tx ou Rx à quatre couleurs consiste à ajouter les deux autres couleurs restantes sur ce bloc source S1. Pour des raisons de clarté, ce bloc source sera référencé S0. On comprend bien que pour des fins de clarté, il s'agit simplement de la configuration qui est reprise : dans la réalité, les pièces physiques et notamment les sources élémentaires pourraient avoir des dimensions et des propriétés différentes.

Le bloc source S0 comprend en outre deux sous-réseaux R31, R32 formant une troisième ligne L3.

Similairement aux première et deuxième lignes L1, L2, les deux sous-réseaux R31, R32 sont décalés entre eux d'un pas correspondant à une source élémentaire selon la première direction X.

La troisième ligne L3 est quant à elle décalée d'un pas correspondant à une source élémentaire dans la deuxième direction Y par rapport à la première ligne L1.

Un entrelacement entre la première et la troisième ligne L1, L3 est alors effectué. De la même façon, un entrelacement entre la deuxième et la troisième ligne L2, L3 est alors effectué.

Dans ce mode de réalisation : la source S11 du sous-réseau R11 correspond à la source S10 du sous-réseau R12, la source S12 du sous-réseau R11 correspond à la source S10 du sous-réseau R31, la source S12 du sous-réseau R12 correspond à la source S11 du sous-réseau R31 et à la source S10 du sous-réseau R32. Par conséquent, il existe des sources élémentaires excitées à trois couleurs différentes. On remarque que selon les sources élémentaires excitées à trois couleurs, ce ne sont pas toujours les trois mêmes couleurs.

Dans cette configuration, 1 répartiteur BFN est utilisé pour alimenter un sous-réseau (R11, R12, R31 ou R32), les faisceaux produits étant ainsi indépendants.

Similairement à la deuxième ligne L2, une quatrième ligne L4 est mise en place, comprenant des deux sous-réseaux R41, R42 qui sont décalés d'un pas correspondant à une source élémentaire selon la première direction X.

La quatrième ligne L4 est quant à elle décalée d'un pas correspondant à une source élémentaire dans la deuxième direction Y par rapport à la deuxième ligne L2 (ou un pas de trois sources élémentaires par rapport à la première ligne L1), de sorte qu'un entrelacement entre la deuxième L2 et la quatrième L4 lignes est effectué.

Cette configuration avec quatre lignes peut être répétée dans la deuxième direction, pour générer davantage de spots.

Dans ce mode de réalisation, Dicr est constant en X et en Y. En effet, en X, on a Dicr= Ds et en Y, on a Dicr = Ds. Cela est l'objectif pour que l'ensemble de la couverture peut être réalisée sur le même bloc source S0.

En revanche, cela impose des contraintes sur les dimensions des sources élémentaires 100 qui ne peuvent pas être Rx et Tx. Le bloc source S0 fonctionne donc soit en Tx, soit en Rx.

Un deuxième bloc source S0 peut alors être prévu, fonctionnant dans l'autre mode. Cet autre bloc source est similaire à celui présentement décrit.

Chacun des blocs sources est équipée avec un réflecteur pour former une antenne.

Le motif défini par les deux sous-réseaux de chaque ligne peut être prolongé sur chaque ligne (de part et d'autre), avec un entrelacement similaire. On obtient alors une alternance de deux couleurs pour les sous-réseaux successifs.

Comme indiqué précédemment, davantage de lignes peuvent être ajoutées.

Dans ce mode de réalisation, tous les couples fréquence/polarisation possibles sont couverts par au moins une source élémentaire. Pour éviter les contraintes d'orthogonalité, des diplexeurs sont avantageusement utilisés, de sorte que chaque source élémentaire à quatre ports pour les quatre couleurs, les quatre couleurs étant respectivement générées par quatre BFNs (voir ci-dessous). Par conséquent, sur une même ligne, n'importe quel choix de deux couleurs parmi les quatre convient.

Alimentation par les diplexeurs

Afin de s'affranchir des contraintes d'orthogonalité, qui provoquent une modification des diagrammes de rayonnement et davantage de pertes ohmiques à cause de la complexifications des circuits (les pertes peuvent être de l'ordre de 1dB), surtout pour le second mode de réalisation dans lequel certaines sources sont excitées à trois couleurs différentes, un type particulier de chaine radiofréquence peut être utilisé.

Ce type particulier utilise des diplexeurs pour générer autant de sorties indépendantes qu'il y a de couleurs. De cette façon, les sources élémentaires 100 peuvent être alimentées par des BFN différents.

On peut donc prévoir, pour générer les quatre couleurs différentes, quatre BFN différents.

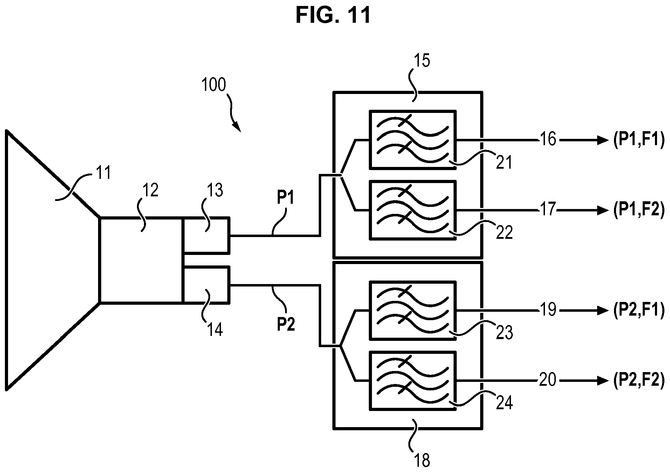

La **figure 11** représente un schéma en coupe longitudinale d'un exemple de source radiofréquence comprenant quatre ports associés à quatre couleurs différentes. La source élémentaire 100 comprend un élément rayonnant 11 et d'une chaîne radiofréquence connectée au cornet 11.

La chaîne radiofréquence comprend un polariseur 12 relié au cornet 11 de la source 100. Le polariseur 12 comprend une première 13 et une deuxième 14 voies de sortie à polarisations P1, P2 orthogonales entre elles et fonctionnant dans une même bande de fréquence DF.

La première voie de sortie 13 du polariseur 12 est reliée à un premier diplexeur 15. Le premier diplexeur 15 comprend deux ports de sortie 16, 17 qui sont de même polarisation et qui sont découplés en fréquence de façon à fonctionner dans deux couleurs différentes.

De même, la deuxième voie de sortie 14 du polariseur 12 est connectée à un deuxième diplexeur 18, le deuxième diplexeur 18 comprend deux ports de sortie 19, 20 de même polarisation, orthogonale à celle des deux ports de sortie 16, 17 du premier diplexeur, et qui sont découplés en fréquence de façon à fonctionner dans deux couleurs différentes.

Les deux ports de sortie 16, 17 du premier diplexeur 15 et les deux ports de sortie 19, 20 du deuxième diplexeur 18, 20 constituent quatre ports de la source 100.

Les deux ports 16, 17 du premier diplexeur 15 fonctionnent donc dans la polarisation P1 et respectivement dans les fréquences F1 et F2 et les deux ports 19, 20 du deuxième diplexeur 18 fonctionnent dans la polarisation P2 et respectivement dans les fréquences F1 et F2.
Les quatre ports 16, 17, 19, 20 de la source 100 fonctionnent donc respectivement dans quatre couleurs différentes correspondant aux quatre couples de valeurs de fréquence et de polarisation suivantes (F1, P1), (F2, P1), (F1, P2), (F2, P2).

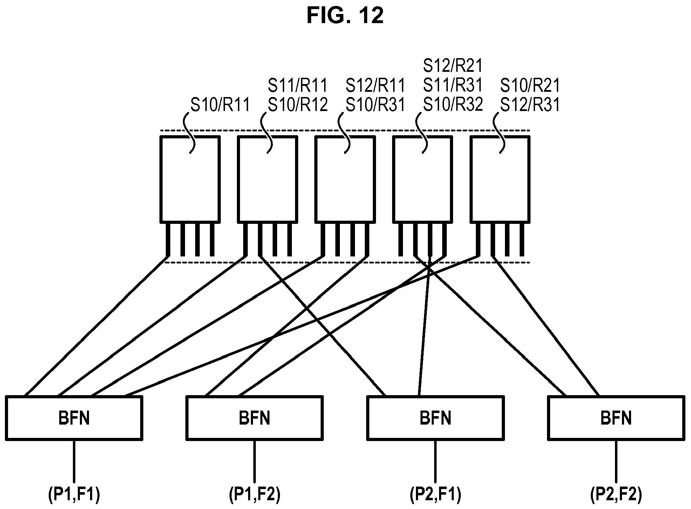

La **figure 12** schématise les raccordements dans le cadre du bloc source S0, pour certaines sources élémentaires 100 (schéma non exhaustif).

**Revendications**

1. Bloc source multi-faisceaux (S0, S1, S2) pour antenne multi-faisceaux (10), le bloc source comportant

   une pluralité de sources élémentaires identiques adjacentes (100),
   au moins un répartiteur (BFN), ledit répartiteur étant configuré pour générer un signal d'excitation des sources élémentaires (100) à une couleur donnée, une couleur correspondant à un couple fréquence/polarisation,

   dans laquelle
   les sources élémentaires (100) sont agencées en sous-réseaux (R) de forme identique,
   l'au moins un répartiteur (BFN) est configuré pour générer un signal d'excitation des sources élémentaires d'un sous-réseau (R) à une fréquence donnée et une polarisation donnée,
   le bloc source étant **caractérisée** en ce le sous-réseau (R) est formé de trois sources élémentaires adjacentes entre elles (S10, S11, S12), définissant une première direction (X) passant par deux des trois sources (S10, S11),
   la source comprenant au moins deux sous-réseaux (R11, R12) formant une première ligne (L1) selon la première direction (X), les deux sous-réseaux (R11, R12, R13) étant décalés, dans la première direction (X), d'un pas (L) correspondant à une source élémentaire, de sorte qu'au moins une source élémentaire (S11) appartient aux deux sous-réseaux (R11, R12), les deux sous-réseaux consécutifs (R11, R12) étant excités à deux couleurs différentes par l'au moins un répartiteur.

2. Bloc source multi-faisceaux (20) selon la revendication 1, dans lequel les trois sources élémentaires (S10, S1, S12) de tout sous-réseau sont agencées en triangle équilatéral.

3. Bloc source selon l'une quelconque des revendications 1 à 2, dans lequel les deux couleurs différentes correspondent à deux couples présentant les mêmes fréquences mais des polarisations différentes.

4. Bloc source selon l'une quelconque des revendications 1 à 3, comprenant en outre deux sous-réseaux (R21, R22) formant une deuxième ligne (L2) selon la première direction (X), les deux sous-réseaux (R21, R22) étant décalés entre eux d'un pas correspondant à une source élémentaire selon la première direction (X), et la deuxième ligne (L2) étant décalée d'un pas correspondant à deux sources élémentaires selon une deuxième direction (Y) orientée à 60° par rapport à la première direction (X), de sorte qu'aucun entrelacement n'ait lieu entre les deux lignes (L1, L2), les sous-réseaux de la deuxième ligne (L2) étant respectivement excités avec les deux mêmes couleurs que celles de la première ligne (L1).

5. Bloc source selon l'une quelconque des revendications 1 à 4, comprenant en outre deux sous-réseaux (R31, R32) formant une troisième ligne (L3), les deux sous-réseaux (R31, R32) étant décalés entre eux d'un pas correspondant à une source élémentaire selon la première direction (X), la troisième ligne (L3) étant décalée d'un pas correspondant à une source élémentaire dans la deuxième direction (Y) par rapport à la première ligne (L1), de sorte qu'un entrelacement entre la première (L1) et la troisième (L3) lignes est effectué.

6. Bloc source selon la revendication 5, comprenant en outre deux sous-réseaux (R41, R42) formant une quatrième ligne (L4), les deux sous-réseaux (R41, R42) étant décalés d'un pas correspondant à une source élémentaire selon la première direction (X), la quatrième ligne (L4) étant décalée d'un pas correspondant à une source élémentaire dans la deuxième direction (Y) par rapport à la deuxième ligne (L2), de sorte qu'un entrelacement entre la deuxième (L2) et la quatrième (L4) lignes est effectué.

7. Bloc source selon l'une quelconque des revendications 1 à 6, dans laquelle chaque source élémentaire comprend au moins un diplexeur, pour générer quatre ports correspondant aux quatre couleurs différentes.

8. Bloc source selon la revendication 7, comprenant quatre répartiteurs (BFN), chacun étant relié à port de sortie (16, 17, 19, 20) d'une source élémentaire, chacun des quatre répartiteurs étant configuré pour générer une des quatre couleurs (P1, F1), (P1, F2), (P2, F1), (P2, F2).

9. Ensemble comprenant deux blocs sources selon l'une quelconque des revendications 1 à 4, chaque bloc source émettant selon deux couleurs distinctes de celles de l'autre bloc source.

10. Antenne multi-faisceaux comprenant une source multi-faisceaux (20) selon l'une quelconque des revendications 1 à 8 ou un ensemble selon la revendication 9, comprenant un réflecteur par bloc source (S0, S1, S2), placé dans le plan focal du bloc source (S0, S1, S2).

# FIG. 1

x

S12
S13 S11
S10
S14 S16
S15

y

**FIG. 2a**

100

Dicr

x

**FIG. 2b**

y

Dicr

**FIG. 2c**

Dis

Dis

Sp

**FIG. 2d**

Dicr

Ds

FIG. 3b

FIG. 3a

FIG. 3d

FIG. 3c

FIG. 4

FIG. 5

EP 3 264 526 A1

FIG. 7

FIG. 6

**FIG. 8**

FIG. 9a

FIG. 9b

FIG. 9c

EP 3 264 526 A1

FIG. 10a

FIG. 10b

FIG. 10c

EP 3 264 526 A1

## FIG. 11

EP 3 264 526 A1

# FIG. 12

EP 3 264 526 A1

**Europäisches Patentamt**
**European Patent Office**
**Office européen des brevets**

# RAPPORT DE RECHERCHE EUROPEENNE

Numéro de la demande

EP 17 17 8423

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | SUDHAKAR K RAO: "Design and Analysis of Multiple-Beam Reflector Antennas", IEEE ANTENNAS AND PROPAGATION MAGAZINE, IEEE SERVICE CENTER, PISCATAWAY, NJ, US, vol. 41, no. 4, 1 août 1999 (1999-08-01), pages 53-59, XP011081201, ISSN: 1045-9243 * 2. introduction; figure 1a * ----- | 1-10 | INV. H01Q1/28 H01Q19/17 H01Q25/00 |
| Y | FR 2 993 715 A1 (THALES SA [FR]) 24 janvier 2014 (2014-01-24) * figures 1,2a * * page 5, ligne 11 - page 11, ligne 11 * * page 1, ligne 7 - ligne 21 * ----- | 1-10 | |

DOMAINES TECHNIQUES RECHERCHES (IPC)

H01Q

Le présent rapport a été établi pour toutes les revendications

| Lieu de la recherche | Date d'achèvement de la recherche | Examinateur |
|---|---|---|
| La Haye | 26 septembre 2017 | Wattiaux, Véronique |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 17 8423

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-09-2017

| Document brevet cité au rapport de recherche | | Date de publication | Membre(s) de la famille de brevet(s) | | Date de publication |
|---|---|---|---|---|---|
| FR 2993715 | A1 | 24-01-2014 | CA | 2821242 A1 | 20-01-2014 |
| | | | EP | 2688138 A1 | 22-01-2014 |
| | | | ES | 2603284 T3 | 24-02-2017 |
| | | | FR | 2993715 A1 | 24-01-2014 |
| | | | JP | 2014023163 A | 03-02-2014 |
| | | | US | 2014022137 A1 | 23-01-2014 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2993715